# EUROPEAN PATENT SPECIFICATION

(11) **EP 1 603 010 B1**
(45) Date of publication and mention of the grant of the patent: **22.05.2019**
(21) Application number: 04253288.7
(22) Date of filing: 02.06.2004
(51) Int. Cl.: G06F 1/32, H04M 19/04

(54) **Power-saving notification circuit for handheld computing device**
Energiesparmeldungsschaltung für ein tragbares Gerät
Circuit de notification à faible consommation d'energie pour un dispositif de calcul de poche

(43) Date of publication of application: 07.12.2005
(73) Proprietor: BlackBerry Limited, Waterloo, ON N2K 0A7 (CA)
(72) Inventor: Drader, Marc A., Waterloo, Ontario N2J 4J1 (CA); Mak-Fan, David James, Waterloo, Ontario N2K 4B1 (CA); Veselic, Dusan, Oakville, Ontario L6M 3N7 (CA)
(74) Representative: Gill Jennings & Every LLP

(56) References cited:
- WO-A1-03/083571
- US-A- 4 755 816
- US-A1- 2002 061 772
- PATENT ABSTRACTS OF JAPAN vol. 2000, no. 01, 31 January 2000 (2000-01-31) -& JP 11 275182 A (NEC SAITAMA LTD), 8 October 1999 (1999-10-08)

## Description

### FIELD OF THE INVENTION

The invention described herein relates to a power-saving notification circuit for a handheld computing device and to a handheld computing device comprising the circuit.

### BACKGROUND OF THE INVENTION

The conventional handheld computing device, such as a PDA, or a wireless telephone, may include an electronic calendar and/or task manager through which the user can keep track of appointments and/or to-do items. The handheld computing device may also include a monochrome notification LED which flashes when the date/time of one of the appointments and/or to-do items is imminent. Further, the notification LED may be used to signify that the handheld computing device is being charged.

More recent handheld computing devices may include a melody integrated circuit. The melody integrated circuit is user-programmable, and plays a user-selected melody when the date/time of one of the appointments and/or to-do items is imminent. If the handheld computing device is wireless-enabled, the melody integrated circuit may also play a user-selected melody when the handheld computing device receives an e-mail or a telephone call.

Prior art examples can be found in documents US 4 755 816, US 2002/0061772 and JP 11275182.

The melody integrated circuit is advantageous, since it allows the user to define a distinct notification (melody) for each notification event (eg. appointment, to-do item, e-mail, telephone call). However, the power consumption of the melody integrated circuit is significantly greater than the monochrome notification LED.

Therefore, there is a need for a lower power notification circuit for a handheld computing device that allows the user to define a distinct notification for each notification event.

### SUMMARY OF THE INVENTION

A power-saving notification circuit for a handheld computing device according to the invention is defined in claim 1.

A handheld computing device comprising the power-saving notification circuit according to the invention is defined in dependent claim 4.

### BRIEF DESCRIPTION OF THE DRAWINGS

The invention will now be described, by way of example only, with reference to the accompanying drawings, in which:

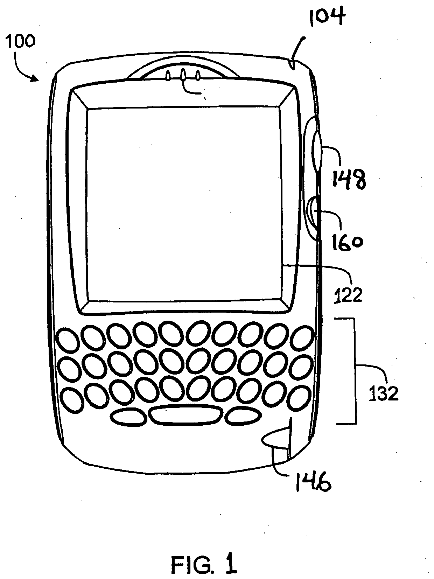

Fig. 1 is a front plan view of a handheld computing device, according the invention described herein;
Fig. 2 is a schematic view depicting functional details of the handheld computing device; and
Fig. 3 is a schematic view of the event notification subsystem of the handheld computing device.

### DETAILED DESCRIPTION OF THE PREFERRED EMBODIMENT

Referring now to Fig .1, there is shown a handheld computing device, denoted generally as 100. The handheld computing device 100 includes a display 122, a function key 146 and a system motherboard (not shown) disposed within a common housing. The display 122 is a self-contained peripheral device that is connected to the system motherboard.

The function key 146 functions as a power on/off switch for the handheld computing device 100, and may also function as a backlight key for the display 122.

In addition to the display 122 and the function key 146, the handheld computing device 100 includes a notification lamp 104, and user data input means for inputting data to the data processing means. As shown, preferably the user data input means includes a keyboard 132, a thumbwheel 148 and an escape key 160.

Typically, the handheld computing device 100 is a two-way wireless communication device having at least voice and data communication capabilities. Further, preferably the handheld computing device 100 has the capability to communicate with other computer systems on the Internet. Depending on the exact functionality provided, the wireless handheld computing device 100 may be referred to as a data messaging device, a two-way pager, a wireless e-mail device, a cellular telephone with data messaging capabilities, a wireless Internet appliance, or a data communication device, as examples.

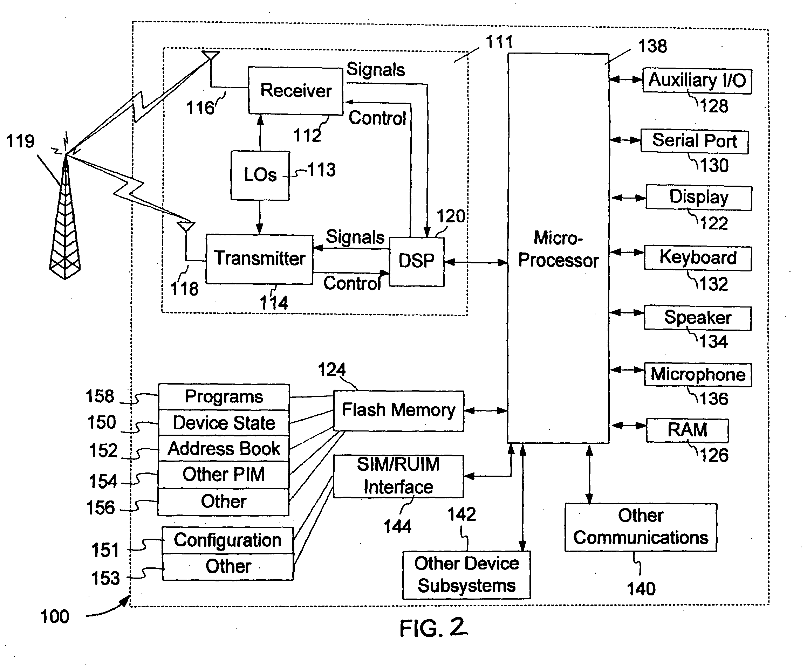

Fig. 2 depicts functional details of the handheld computing device 100. Where the handheld computing device 100 is enabled for two-way communication, it will incorporate a communication subsystem 111, including both a receiver 112 and a transmitter 114, as well as associated components such as one or more, preferably embedded or internal, antenna elements 116 and 118, local oscillators (LOs) 113, and a processing module such as a digital signal processor (DSP) 120. As will be apparent to those skilled in the field of communications, the particular design of the communication subsystem 111 will be dependent upon the communication network in which the device is intended to operate. For example, the handheld computing device 100 may include a communication subsystem 111 designed to operate within the Mobitex™ mobile communication system, the DataTAC™ mobile communication system, GPRS network, UMTS network, EDGE network or CDMA network.

Network access requirements will also vary depending upon the type of network 119. For example, in the Mobitex and DataTAC networks, the handheld computing device 100 is registered on the network using a unique identification number associated with each handheld computing device . In UMTS and GPRS networks, and in some CDMA networks, however, network access is associated with a subscriber or user of the handheld computing device 100. A GPRS handheld computing device therefore requires a subscriber identity module (SIM) card in order to operate on a GPRS network, and a RUIM in order to operate on some CDMA networks. Without a valid SIM/RUIM card, a GPRS/UMTS/CDMA handheld computing device may not be fully functional. Local or non-network communication functions, as well as legally required functions (if any) such as "911" emergency calling, may be available, but the handheld computing device 100 will be unable to carry out any other functions involving communications over the network. The SIM/RUIM interface 144 is normally similar to a card-slot into which a SIM/RUIM card can be inserted and ejected like a diskette or PCMCIA card. The SIM/RUIM card can have approximately 64K of memory and hold many key configuration 151, and other information 153 such as identification, and subscriber related information.

When required network registration or activation methods have been completed, the handheld computing device 100 may send and receive communication signals over the network 119. Signals received by antenna 116 through communication network 119 are input to receiver 112, which may perform such common receiver functions as signal amplification, frequency down conversion, filtering, channel selection and the like, and in the example system shown in Fig. 2, analog to digital (A/D) conversion. A/D conversion of a received signal allows more complex communication functions such as demodulation and decoding to be performed in the DSP 120. In a similar manner, signals to be transmitted are processed, including modulation and encoding for example, by DSP 120 and input to transmitter 114 for digital to analog conversion, frequency up conversion, filtering, amplification and transmission over the communication network 119 via antenna 118. DSP 120 not only processes communication signals, but also provides for receiver and transmitter control. For example, the gains applied to communication signals in receiver 112 and transmitter 114 may be adaptively controlled through automatic gain control algorithms implemented in DSP 120.

The handheld computing device 100 preferably includes a microprocessor 138 which controls the overall operation of the device. Communication functions, including at least data and voice communications, are performed through communication subsystem 111. Microprocessor 138 also interacts with further device subsystems such as the display 122, flash memory 124, random access memory (RAM) 126, auxiliary input/output (I/O) subsystems 128, serial port 130, keyboard 132, speaker 134, microphone 136, a short-range communications subsystem 140 and any other device subsystems generally designated as 142.

Some of the subsystems shown in Fig. 2 perform communication-related functions, whereas other subsystems may provide "resident" or on-device functions. Some subsystems, such as keyboard 132 and display 122, for example, may be used for both communication-related functions, such as entering a text message for transmission over a communication network, and device-resident functions such as a calculator or task list.

Another such subsystem comprises an event notification subsystem 142 that notifies the user of the handheld computing device 100 of the occurrence of a notification event (eg. appointment, to-do item, e-mail, telephone call). The notification subsystem 142 will be described in detail below.

Operating system software used by the microprocessor 138 is preferably stored in a persistent store such as flash memory 124, which may instead be a read-only memory (ROM) or similar storage element (not shown). Those skilled in the art will appreciate that the operating system, specific device applications, or parts thereof, may be temporarily loaded into a volatile memory such as RAM 126. Received communication signals may also be stored in RAM 126.

As shown, the flash memory 124 can be segregated into different areas for both computer programs 158 and program data storage 150, 152, 154 and 156. These different storage areas indicate that each program can allocate a portion of flash memory 124 for their own data storage requirements. In addition to its operating system functions, preferably the microprocessor 138 enables execution of software applications on the handheld computing device. A predetermined set of applications that control basic operations, will normally be installed on the handheld computing device 100 during manufacturing.

One set of basic software applications might perform data and/or voice communication functions, for example. Another set of basic software applications comprises computer processing instructions which, when accessed from the flash memory 124 and/or the RAM 126 and executed by the microprocessor 138, define a notification controller 102. The notification controller 102 interacts with the aforementioned event notification subsystem 142, and selects between the different notification types offered by the notification subsystem 142. The notification controller 102 will be described in detail below.

A preferred software application may be a personal information manager (PIM) application having the ability to organize and manage data items relating to the user of the handheld computing device such as, but not limited to, e-mail, calendar events, voice mails, appointments, and task items. Naturally, one or more memory stores would be available on the handheld computing device to facilitate storage of PIM data items. Such PIM application would preferably have the ability to send and receive data items, via the wireless network 119. In a preferred embodiment, the PIM data items are seamlessly integrated, synchronized and updated, via the wireless network 119, with the user's corresponding data items stored or associated with a host computer system. Further applications may also be loaded onto the handheld computing device 100 through the network 119, an auxiliary I/O subsystem 128, serial port 130, short-range communications subsystem 140 or any other suitable subsystem 142, and installed by a user in the RAM 126 or preferably a non-volatile store (not shown) for execution by the microprocessor 138. Such flexibility in application installation increases the functionality of the device and may provide enhanced on-device functions, communication-related functions, or both. For example, secure communication applications may enable electronic commerce functions and other such financial transactions to be performed using the handheld computing device 100.

In a data communication mode, a received signal such as a text message or web page download will be processed by the communication subsystem 111 and input to the microprocessor 138, which preferably further processes the received signal for output to the display 122, or alternatively to an auxiliary I/O device 128. A user of the handheld computing device 100 may also compose data items such as email messages for example, using the keyboard 132, which is preferably a complete alphanumeric keyboard or telephone-type keypad, in conjunction with the display 122 and possibly an auxiliary I/O device 128. Such composed items may then be transmitted over a communication network through the communication subsystem 111.

For voice communications, overall operation of the handheld computing device 100 is similar, except that received signals would preferably be output to a speaker 134 and signals for transmission would be generated by a microphone 136. Alternative voice or audio I/O subsystems, such as a voice message recording subsystem, may also be implemented on the handheld computing device 100. Although voice or audio signal output is preferably accomplished primarily through the speaker 134, display 122 may also be used to provide an indication of the identity of a calling party, the duration of a voice call, or other voice call related information for example.

Serial port 130 in Fig. 2, would normally be implemented in a personal digital assistant (PDA)-type handheld computing device for which synchronization with a user's desktop computer (not shown) may be desirable. The serial port 130 enables a user to set preferences through an external device or software application and would extend the capabilities of the handheld computing device 100 by providing for information or software downloads to the handheld computing device 100 other than through a wireless communication network.

Other communications subsystems 140, such as a short-range communications subsystem, is a further optional component which may provide for communication between the handheld computing device 100 and different systems or devices, which need not necessarily be similar devices. For example, the subsystem 140 may include an infrared device and associated circuits and components or a Bluetooth™ communication module to provide for communication with similarly enabled systems and devices.

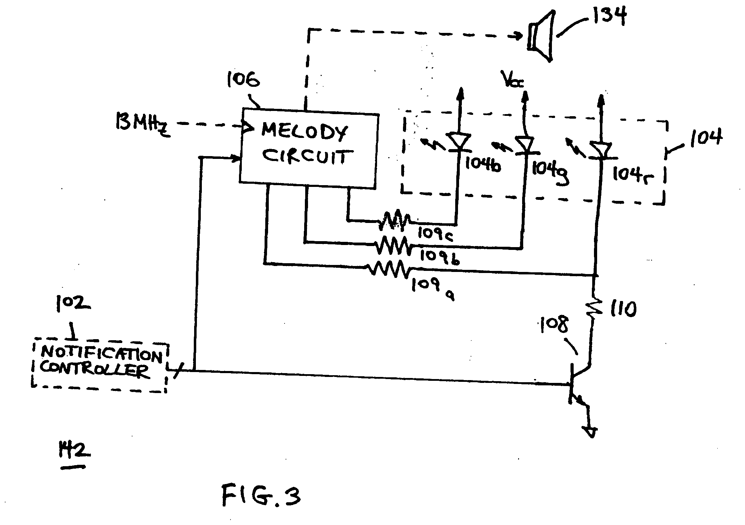

Fig. 3 depicts the aforementioned event notification subsystem 142. As shown, the event notification subsystem 142 comprises the notification lamp 104, a melody circuit 106 coupled to the notification lamp 104, and an electronic switch 108 coupled to the notification lamp 104. Preferably, the melody circuit 106 include an audio output in communication with the subsystem that drives the speaker 134.

Further, typically the notification lamp 104 is a tri-colour lamp that comprises three monochrome LEDs. Preferably, the notification lamp 104 includes a red LED 104r, a green LED 104g, and a blue LED 104b that are disposed within a common housing, and are enclosed by a common transparent lens. However, it should be understood that the notification lamp 104 is not so limited by may comprise any number of coloured lamps, and/or colours of lamps. For instance, the notification lamp 104 may comprise one or more differently-coloured monochrome lamps. The notification lamp 104 may also comprise a number of similarly-coloured lamps, each having a respective illumination intensity. Variations on the foregoing will be apparent and are intended to be encompassed by the invention, as defined by the appended claims.

The melody circuit 106 is an integrated circuit that is mounted on the motherboard of the handheld computing device 100. Preferably, the melody circuit 106 is user-programmable with one or more tunes that can be played through the speaker 134 in response to the notification event associated with the tune. Typically, the user downloads tunes to the handheld computing device 100, over the serial port 130 or the wireless communication network. A suitable melody circuit 106 is OKI ML2870A.

The melody circuit 106 has a tune select input through which the melody circuit 106 is notified of the tune to play. The melody circuit 106 also includes a number of lamp driver outputs, each coupled to a respective one of the monochrome LEDs 104r, 104g, 104b through a respective current-limiting resistor 109a, 109b, 109c. The lamp driver outputs allow the melody circuit 106 to turn the monochrome LEDs 104r, 104g, 104b on and off.

Typically, the melody circuit 106 flashes the LEDs 104r, 104g, 104b in synchronization to the melody being played through the speaker 134. Alternately, the melody circuit 106 may be programmed to vary the duty cycle of the on/off interval for each of the LEDs 104r, 104g, 104b, so that the colour of the multicolour lamp 104 varies in synchronization to the melody.

The notification subsystem 142 also includes a current-limiting resistor 110, connected in series with one of the three monochrome LEDs. In the example shown, the current-limiting resistor 110 is connected in series with the red LED 104r, but is in parallel with the current-limiting resistors 109r and the corresponding lamp driver output of the melody circuit 106.

Preferably, the electronic switch 108 comprises a transistor having a drain/source terminal that is coupled to the red LED 104r through the current-limiting resistor 110. The electronic switch 108 includes a gate/base input which is used to turn the electronic switch 108 on and off. Typically, the electronic switch 108 will periodically flash the monochrome LED 104r. Alternately, the electronic switch 108 may maintain the monochrome LED 104r continuously on.

It should be understood that the current-limiting resistor 110 and the electronic switch 108 need not be connected to the red LED 104r, but can be connected to any of the monochrome LEDs 104. For instance, if it is desirable to notify the user of an active Bluetooth connection, the current limiting resistor 100 and the electronic switch 108 could be connected to the blue LED 104b. Further, the notification subsystem 142 is not limited to having only one electronic switch 108, but instead could include a separate electronic switch for each lamp of the notification lamp 104.

The melody circuit 106 requires a high frequency clock (approximately 13 MHz), which causes the melody circuit 106, when active, to consume significantly more power than the electronic switch 108. Further, the resistance of the current-limiting resistors 109 is less than that of the current-limiting resistor 110. Accordingly, the power consumption of the second notification type (via electronic switch 108) is less than that of the first notification type (via melody circuit 106).

As discussed above, the microprocessor 138 is in physical communication with the notification subsystem 142. In particular, the microprocessor 138 includes I/O channels that are coupled to the tune select input of the melody circuit 106, and the gate/base input of the electronic switch 108. The notification controller 102 is defined by a set of computer processing instructions which are executed by the microprocessor 138 from the RAM 126. In effect, therefore, the notification controller 102 is coupled to the tune select input of the melody circuit 106, and the gate/base input of the electronic switch 108, through the hardware connections of the microprocessor 138.

The notification controller 102 also comprises a user event notification table that is maintained in one of the program data storage areas 150, 152, 154 and 156 of the flash memory 124. Through the notification controller 102, the user associates a notification event (eg. appointment, to-do item, e-mail, telephone call) with a desired notification type. For instance, through the notification table, the user might configure the notification controller 102 to:
(1) play one tune when an e-mail arrives;
(2) play another tune and flash one or more of the LEDs 104 in synchronization with the tune upon receipt of a telephone call, and/or
(3) flash (or turn on) the red LED 104r a predetermined time prior to the commencement of an appointment.

The notification controller 102 is also configured with at least four notification modes. In a first of the notification modes, the notification controller 102 maintains the melody circuit 106 in a low-power or sleep state, and maintains the electronic switch 108 open. In this mode, no event notification is provided, and the power consumption of notification subsystem 142 is minimal.

In a second of the notification modes, the notification controller 102 maintains the electronic switch 108 open, enables the melody circuit 106, and disables the lamp driver outputs. In response to the occurrence of a notification event, the notification controller 102 selects the melody that the user associated with the particular notification event, and transmits a command to the melody circuit 106 for playback of the appropriate melody. In response, the melody circuit 106 plays the selected melody over the speaker 134. This response corresponds to sample notification (1), discussed above.

In a third of the notification modes, the notification controller 102 maintains the electronic switch 108 open, enables the melody circuit 106, and enables the lamp driver outputs. In response to the occurrence of a notification event, the notification controller 102 selects the tune that the user associated with the particular notification event, and transmits a command to the melody circuit 106 for playback of the appropriate melody. In response, the melody circuit 106 plays the selected melody over the speaker 134, and flashes the LEDs 104 in synchronization with the selected melody. This response corresponds to sample notification (2), discussed above.

In the second and third notification modes, since the melody circuit 106 is fully operational, the power consumption of the notification subsystem 142 is at its maximum.

In a fourth of the notification modes, the notification controller 102 maintains the melody circuit 106 in the low-power or sleep state. The notification controller 102 periodically opens and closes the electronic switch 108, thereby causing the monochrome LED 104r to flash on or off. Alternately, the notification controller 102 may maintain the electronic switch 108 closed, thereby turning the monochrome LED 104r continuously on.

Since the monochrome LED 104r is on (or periodically on), the power consumption of notification subsystem 142 in this fourth notification mode is greater than that in the first notification mode. However, since the melody circuit 106 is in the low-power or sleep state, the power consumption of notification subsystem 142 in the fourth notification mode is greater than that in the second and third notification modes. As a result, the user can control power consumption of the notification subsystem 142 through the notification mode selected for each desired notification event.

The present invention is defined by the claims appended hereto, with the foregoing description being merely illustrative of a preferred embodiment of the invention. Those of ordinary skill may envisage certain modifications to the foregoing embodiments which, although not explicitly discussed herein, do not depart from the scope of the invention, as defined by the appended claims.

## Claims

1. A power-saving notification circuit for a handheld computing device, comprising:
a notification lamp (104) comprising a plurality of monochrome lamps (104r, 104g, 104b);
a melody circuit (106) coupled to the notification lamp for providing a first type notification by playing a melody and varying a duty cycle of or flashing the notification lamp in synchronisation to the melody; and
an electronic switch (108) coupled to the notification lamp for providing a second type notification via one of the monochrome lamps, the second type notification having a power consumption less than that of the first type notification,
wherein the melody circuit includes a plurality of lamp driver outputs, each of said lamp driver outputs being coupled to a respective one of the monochrome lamps through a respective current-limiting resistor (109a, 109b, 109c), and
wherein the electronic switch is connected in series with a further current limiting resistor (110) to said one of the monochrome lamps, wherein the resistance of said further current limiting resistor is greater than the resistance of the respective current-limiting resistors.

2. The power-saving notification circuit according to claim 1, wherein the monochrome lamps comprise a plurality of differently-coloured monochrome lamps.

3. The power-saving notification circuit according to claim 2, wherein the notification lamp comprises a tri-coloured LED.

4. A handheld computing device comprising:
a power-saving notification circuit according to any preceding claim; and
a notification controller (102) coupled to the melody circuit and the electronic switch for selecting between the notification types.

5. The handheld computing device according to claim 4, wherein the notification controller is configured with a plurality of notification modes,
in a first of the notification modes, the notification controller maintaining the melody circuit in a low-power state, and maintaining the electronic switch open;
in a second of the notification modes, the notification controller maintaining the melody circuit in the low-power state, and closing the electronic switch;
in a third of the notification modes, the notification controller maintaining the electronic switch open, and enabling the melody circuit.

6. The handheld computing device according to claim 5, wherein in a second of the notification modes, the notification controller is configured to periodically open and close the electronic switch.

7. The handheld computing device according to any of claims 4 to 6, further comprising a speaker, wherein the melody is played via the speaker.

## Patentansprüche

1. Energiesparmeldungsschaltung für ein tragbares Rechengerät, umfassend:
eine Meldeleuchte (104), die mehrere monochrome Leuchten (104r, 104g, 104b) umfasst;
eine Melodieschaltung (106), die an die Meldeleuchte zum Vorsehen einer ersten Art von Meldung durch Abspielen einer Melodie und Variieren eines Dienstzyklus der Meldeleuchte oder Aufblinkenlassen der Meldeleuchte in Synchronisation mit der Melodie gekoppelt ist; und
einen elektronischen Schalter (108), der an die Meldeleuchte zum Vorsehen einer zweiten Art von Meldung über eine der monochromen Leuchten gekoppelt ist, wobei die zweite Art von Meldung einen Leistungsverbrauch aufweist, der geringer als jener der ersten Art von Meldung ist,
wobei die Melodieschaltung mehrere Leuchtentreiberausgänge enthält, wobei jeder der Leuchtentreiberausgänge über einen jeweiligen Strombegrenzungswiderstand (109a, 109b, 109c) an eine jeweilige der monochromen Leuchten gekoppelt ist, und wobei der elektronische Schalter in Reihe mit einem weiteren Strombegrenzungswiderstand (110) mit der einen der monochromen Leuchten verbunden ist, wobei der Widerstand des weiteren Strombegrenzungswiderstands größer als der Widerstand der jeweiligen Strombegrenzungswiderstände ist.

2. Energiesparmeldungsschaltung nach Anspruch 1, wobei die monochromen Leuchten mehrere verschiedenfarbige monochrome Leuchten umfassen.

3. Energiesparmeldungsschaltung nach Anspruch 2, wobei die Meldeleuchte eine dreifarbige LED umfasst.

4. Tragbares Rechengerät, umfassend:
eine Energiesparmeldungsschaltung nach einem der vorhergehenden Ansprüche; und
eine Meldungssteuerung (102) die an die Melodieschaltung und den elektronischen Schalter zum Auswählen zwischen den Meldungsarten gekoppelt ist.

5. Tragbares Rechengerät nach Anspruch 4, wobei die Meldungssteuerung mit mehreren Meldungsmodi konfiguriert ist,
wobei in einem ersten der Meldungsmodi die Meldungssteuerung die Melodieschaltung in einem energiearmen Zustand erhält und den elektronischen Schalter offen erhält;
in einem zweiten der Meldungsmodi die Meldungssteuerung die Melodieschaltung im energiearmen Zustand erhält und den elektronischen Schalter schließt;
in einem dritten der Meldungsmodi die Meldungssteuerung den elektronischen Schalter offen erhält und die Melodieschaltung aktiviert.

6. Tragbares Rechengerät nach Anspruch 5, wobei in einem zweiten der Meldungsmodi die Meldungssteuerung zum periodischen Öffnen und Schließen des elektronischen Schalters konfiguriert ist.

7. Tragbares Rechengerät nach einem der Ansprüche 4 bis 6, ferner umfassend einen Lautsprecher, wobei die Melodie über den Lautsprecher abgespielt wird.

## Revendications

1. Circuit de notification d'économie d'énergie pour dispositif informatique de poche, comprenant :
une lampe de notification (104) comprenant une pluralité de lampes monochromes (104r, 104g, 104b) ;
un circuit de mélodie (106) couplé à la lampe de notification pour produire une notification d'un premier type en jouant une mélodie et en faisant varier un rapport cyclique de la lampe de notification ou en faisant clignoter celle-ci en synchronisation avec la mélodie ; et
un interrupteur électronique (108) couplé à la lampe de notification pour produire une notification d'un second type par le biais de l'une des lampes monochromes, la notification du second type ayant une consommation d'énergie moindre que celle de la notification du premier type,
dans lequel le circuit de mélodie comporte une pluralité de sorties d'attaque de lampes, chacune desdites sorties d'attaque de lampes étant couplée à l'une respective des lampes monochromes par l'intermédiaire d'une résistance de limitation de courant respective (109a, 109b, 109c), et
dans lequel l'interrupteur électronique est connecté en série avec une autre résistance de limitation de courant (110) à ladite une des lampes monochromes, où la valeur de résistance de ladite autre résistance de limitation de courant est supérieure à la valeur de résistance des résistances de limitation de courant respectives.

2. Circuit de notification d'économie d'énergie selon la revendication 1, dans lequel les lampes monochromes comprennent une pluralité de lampes monochromes de couleurs différentes.

3. Circuit de notification d'économie d'énergie selon la revendication 2, dans lequel la lampe de notification comprend une DEL tricolore.

4. Dispositif informatique de poche, comprenant :
un circuit de notification d'économie d'énergie selon l'une quelconque des revendications précédentes ; et
un dispositif de commande de notification (102) couplé au circuit de mélodie et à l'interrupteur électronique pour sélectionner l'un des types de notification.

5. Dispositif informatique de poche selon la revendication 4, dans lequel le dispositif de commande de notification est configuré avec une pluralité de modes de notification,
dans un premier des modes de notification, le dispositif de commande de notification maintenant le circuit de mélodie dans un état de faible puissance et maintenant l'interrupteur électronique ouvert ;
dans un deuxième des modes de notification, le dispositif de commande de notification maintenant le circuit de mélodie dans l'état de faible puissance, et fermant l'interrupteur électronique ;
dans un troisième des modes de notification, le dispositif de commande de notification maintenant l'interrupteur ouvert, et activant le circuit de mélodie.

6. Dispositif informatique de poche selon la revendication 5, dans lequel, dans un deuxième des modes de notification, le dispositif de commande de notification est conçu pour ouvrir et fermer périodiquement l'interrupteur électronique.

7. Dispositif informatique de poche selon l'une quelconque des revendications 4 à 6, comprenant en outre un haut-parleur, dans lequel la mélodie est jouée par le biais du haut-parleur.
